# EUROPÄISCHE PATENTSCHRIFT

(11) **EP 2 081 974 B1**
(45) Veröffentlichungstag und Bekanntmachung des Hinweises auf die Patenterteilung: **23.02.2011**
(21) Anmeldenummer: 07802331.4
(22) Anmeldetag: 15.09.2007
(51) Int. Cl.: C08G 64/12

(54) **POLYCARBONATE UND COPOLYCARBONATE MIT VERBESSERTER METALLHAFTUNG**
POLYCARBONATES AND COPOLYCARBONATES WITH IMPROVED METAL ADHESION
POLYCARBONATES ET COPOLYCARBONATES A ADHERENCE AMELIOREE SUR LES METAUX

(30) Priorität: 28.09.2006 DE 102006046330
(43) Veröffentlichungstag der Anmeldung: 29.07.2009
(73) Patentinhaber: Bayer MaterialScience AG, 51368 Leverkusen (DE)
(72) Erfinder: HEUER, Helmut-Werner, 47829 Krefeld (DE)
(86) Internationale Anmeldenummer: PCT/EP2007/008048
(87) Internationale Veröffentlichungsnummer: WO 2008/037364

(56) Entgegenhaltungen:
- EP-A- 1 582 549
- WO-A-2007/136934

## Beschreibung

Gegenstand der vorliegenden Erfindung sind Copolycarbonate mit höherer Glas- und damit auch Gebrauchstemperatur und verbesserter Metallhaftung, Verfahren zu deren Herstellung und deren Verwendung zur Herstellung von Blends, Formteilen und Extrudaten erhältlich daraus. Gegenstand der Erfindung sind weiterhin zwei neue Bisphenole und deren Verwendung zur Herstellung von Copolycarbonaten.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus.

Zur Gewinnung hochmolekularer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z. B. Phenol oder tert.-Butylphenol gesteuert werden. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Zur Herstellung von Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

Zur Herstellung der Polycarbonate nach dem Schmelzumesterungsverfahren werden die Bisphenole mit Diarylcarbonaten, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Aus EP-A 1 582 549 sind Polycarbonate auf Basis von 2-Hydrocarbyl-3,3-Bis(4-Hydroxy-aryl)phthalimidine als Monomere bekannt, die sich durch Synthese aus Phenolphtalein und einem Anilinhydrochloridderivat in Anilin herstellen lassen. Diese Herstellung ist sehr aufwändig und verläuft nicht zufriedenstellend. Diese Bisphenolklasse hat also den technischen Nachteil, nur sehr umständlich zugänglich zu sein.

Die im Stand der Technik vorbeschriebenen Polycarbonate bzw. Copolycarbonate haben jedoch durch ihre mangelhafte Metallhaftung den Nachteil, dass sie beim Einsatz als metallisiertes Bauteil bei z. B. Hochtemperaturanwendungen nur beschränkt oder nicht optimal geeignet sein können.

Es bestand daher die Aufgabe, Copolycarbonate und Verfahren zu deren Herstellung verfügbar zu machen, welche diese Nachteile vermeiden. Diese Aufgabe wird überraschenderweise durch den Einsatz der erfindungsgemäßen Klasse von Bisphenolen der allgemeinen Formeln (1a) und (1b) (Isomerengemisch) (im Folgenden auch als Bisphenole der Formel (1) bezeichnet). 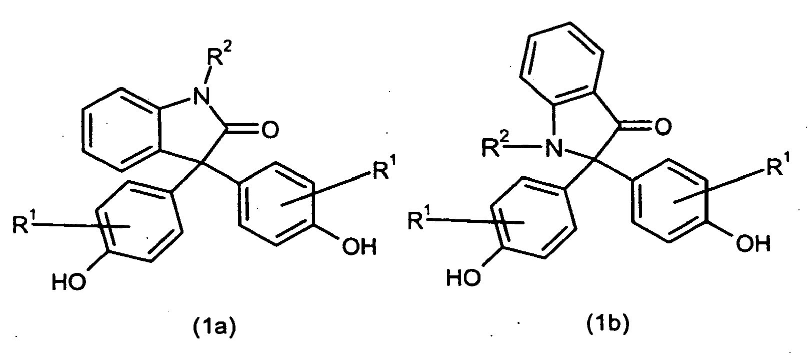 gelöst, in welcher
- R¹: unabhängig voneinander für Wasserstoff oder C₁-C₁₀ Alkyl, bevorzugt für Wasserstoff oder C₁-C₆ Alkyl, besonders bevorzugt Wasserstoff oder C₁-C₄ Alkyl, ganz besonders bevorzugt für Wasserstoff oder Methyl steht
- R²: für C₁-C₁₀ Alkyl, bevorzugt C₁-C₆ Alkyl, besonders bevorzugt C₁-C₄ Alkyl, jeweils gegebenenfalls substituiertes Phenyl oder Benzyl, insbesondere Methyl, Phenyl oder Benzyl steht, wobei als Substituenten für Phenyl und Benzyl die bei R¹ genannten Reste bevorzugt sind.

Alkyl im Sinne der vorliegenden Erfindung ist jeweils linear oder verzweigt.

Besonders bevorzugt steht R² für gegebenenfalls durch die in R¹ genannten Reste substituiertes Phenyl, dargestellt durch die Formel (1c) und (1d) (Isomerengemisch). 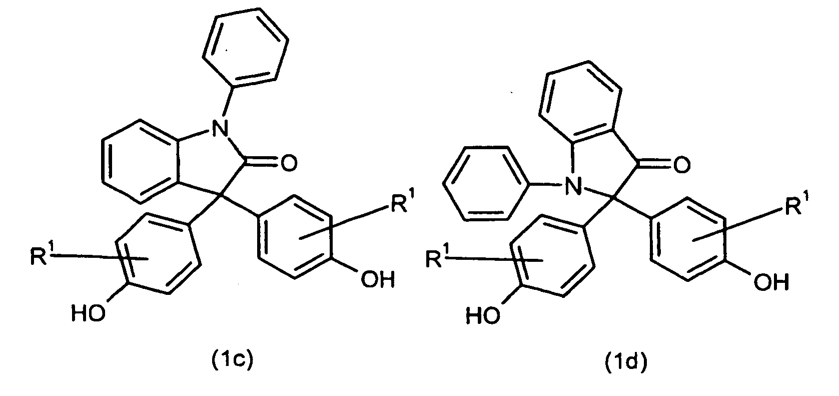 worin

R¹ die oben genannte Bedeutung hat.

Ganz besonders bevorzugt ist das Bisphenol der Formel (1e) und (1f) (Isomerengemisch).

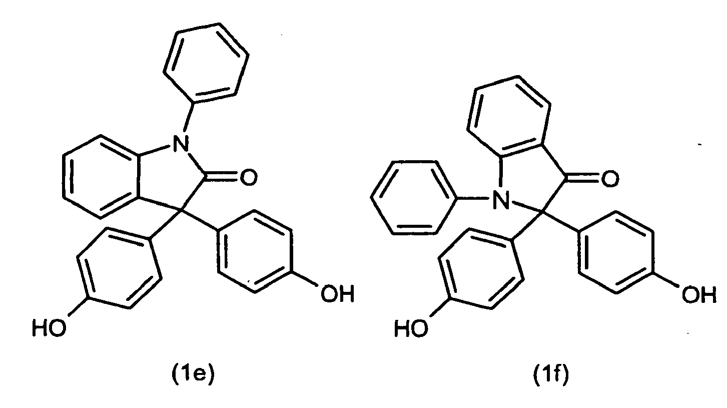

Diese erfindungsgemäßen Bisphenole der Formel (1) lassen sich aus Phenolderivaten und N-substituierten Isatinderivaten, in einer sauer-katalysierten Reaktion herstellen. Dies kann mittels analogen Reaktionen erfolgen, welche für die Herstellung von unsubstituierten Isatinbisphenolen beschrieben ist (H. N. Song et al., Synthetic Communications 1999, 29 (19), 3303 bzw. R. Berendes, H. Klös, Patentschrift Nr. 488760, Reichspatentamt Deutsches Reich 1930).

Die Synthese der erfindungsgemäßen Bisphenole wird bevorzugt als Kondensationsreaktion entsprechender Phenole und Isatinderivate durchgeführt, wie folgendes Beispiel zeigt: 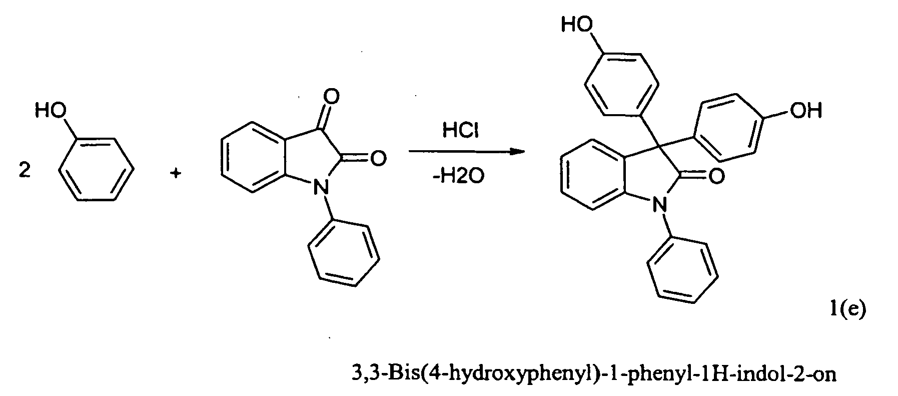 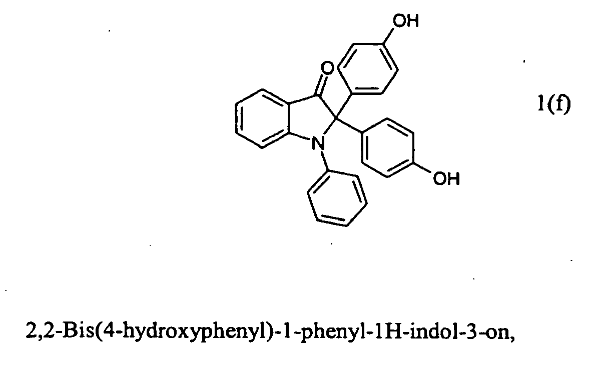 wobei ein Isomerengemisch erhalten wird.

Ganz besonders bevorzugt wird die Kondensation mit Salzsäure als saurem Katalysator bei Temperaturen zwischen 0 und 60°C mit einem stöchiometrischen Verhältnis von Phenolderivat zu Ketonderivat von 10 zu 1 ausgeführt, wobei als schwefelhaltige Verbindung bevorzugt eine Mercaptan- oder Thiocarbonsäure-Verbindung (z. B. Dodecylmercaptan, Mercaptopropionsäure oder Thioessigsäure), zugegen ist, bevorzugt nur in etwa 0,01 bis 25 % bezogen auf die Ketonverbindung. Die Salzsäure wird ganz besonders bevorzugt als HCl-Gas eingeleitet.

Die Kondensation kann in Substanz oder in Lösung durchgeführt werden. Dabei kommen inerte Lösungsmittel, wie beispielsweise chlorierte Kohlenwasserstoffe wie Methylenchlorid, Dichlorethan oder Toluol, Xylole oder Chlorbenzole zum Einsatz.

Besonders bevorzugt wird die Reaktion in Substanz mit einem Überschuss an Phenol durchgeführt.

Eine weitere Synthesemöglichkeit zur Herstellung von N-Phenylisatin besteht in der Verwendung von kommerziell erhältlichem Isatin (z.B. BASF AG) in Form einer N-Arylierungsreaktion. Die folgenden literaturbekannten metallorganischen Synthesen stehen dabei zur Verfügung.

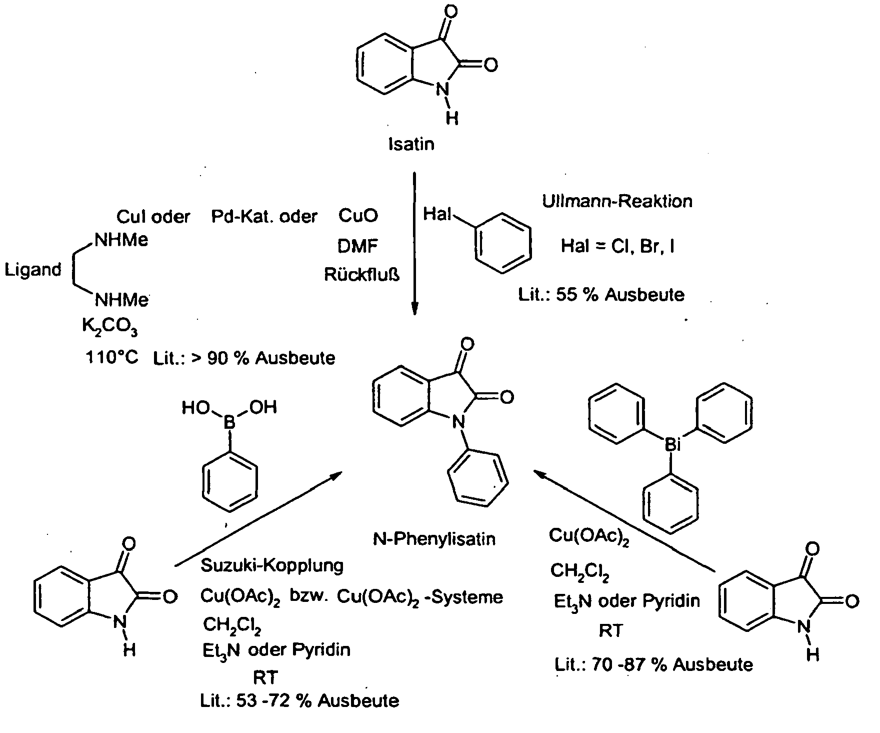

Eine weitere Synthesemöglichkeit zur Herstellung von N-Phenylisatin besteht in der Anwendung des Isonitrosoacetanilid-Isatin-Verfahrens (früher zur Herstellung von Indigo, Traugott Sandmeyer, Fa. Geigy Basel 1919). Die folgenden Reaktionsschritte werden dabei durchgeführt :

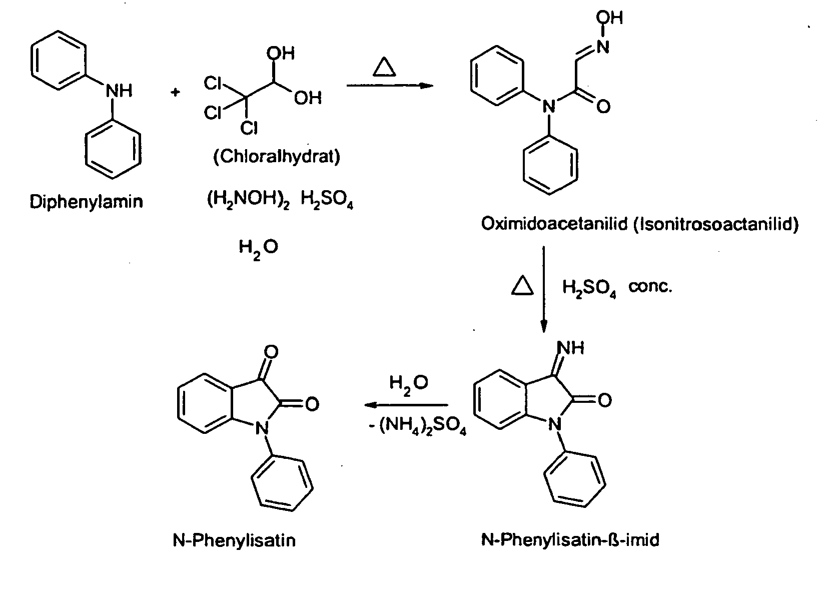

Eine weitere Synthesemöglichkeit zur Herstellung von N-Phenylisatin besteht über die Reaktionsstufe eines Nitrons. Die folgenden Reaktionsschritte werden dabei durchgeführt:

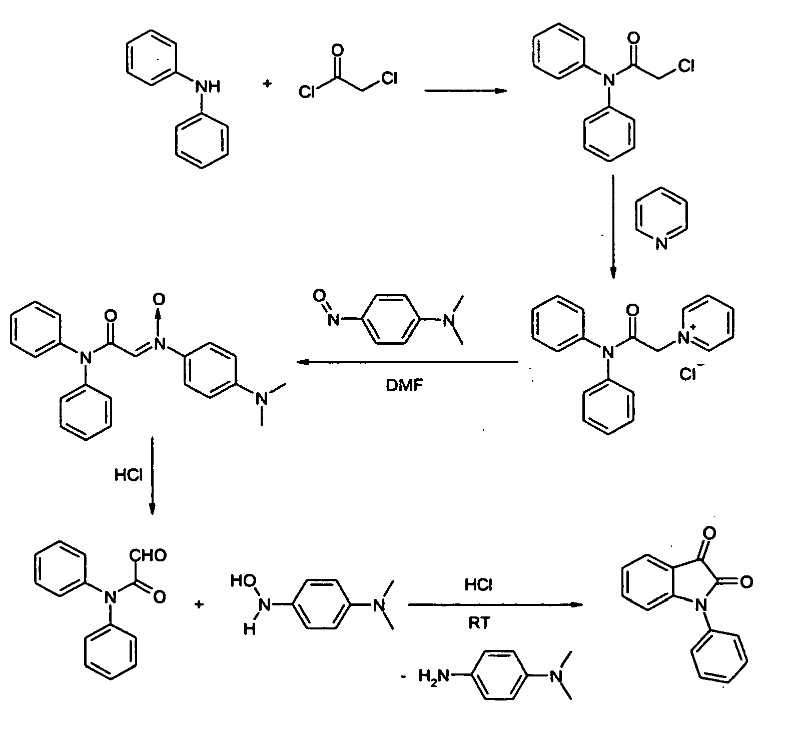

Die eingesetzten Phenole sind bekannt oder können nach literaturbekannten Verfahren, beispielsweise durch Alkylierung nach Friedel Crafts, hergestellt werden (Organikum, Organischchemisches Grundpraktikum, Korrigierter Nachdruck der 20. Auflage, Wiley-VCH, Weinheim, S. 355, 1999.). Sehr viele Phenole sind auch käuflich erhältlich (Lieferanten z. B. Aldrich, Fluka, Acros usw.).

Die verwendeten Isatinderivate sind ebenfalls bekannt oder können nach literaturbekannten Verfahren, beispielsweise durch Alkylierung des entsprechenden Isatingrundkörpers, hergestellt werden. Beispielsweise sind sie aus den entsprechenden Natrium- bzw. Kalium-Salzen des IsatinGrundkörpers durch Umsetzung mit Alkylhalogeniden in absolutem Alkohol zugänglich (G. Heller, O. Nötzel, Ber. Dtsch. Chem. Ges. 1907, 40, 1294). Eine alternative Synthesemöglichkeit bietet die Alkylierung über O-alkylierte Isoharnstoffderivate (E. Vowinkel, Chem. Ber. 1966, 99, 1479. bzw. L. J.Mathias, Synthesis 1979, 561). Diese lassen sich durch Umsetzung von N,N'-Dicyclohexylcarbodiimid mit einem Alkohol in Gegenwart von Kupfer(I)-chlorid gewinnen (E. Schmidt, F. Moosmüller, Liebigs Ann. Chem. 1955, 597, 235). Einige N-substituierte Isatine sind auch käuflich erhältlich (Lieferanten z. B. ChemPur GmbH, Karlsruhe, Deutschland oder Alfa Aesar, Karlsruhe Deutschland oder Sigma-Aldrich oder Lancaster Synthesis Ltd. Newgate, United Kingdom).

Ebenfalls Gegenstand der vorliegenden Erfindung sind Copolycarbonate, die unter Verwendung der erfindungsgemäßen Bisphenole hergestellt werden sowie die entsprechenden Herstellungsverfahren.

Die erfindungsgemäßen Copolycarbonate basieren auf Bisphenolen der allgemeinen Formeln (1a₁) und (1b₁)) (Isomerengemisch) als wiederkehrende Monomereinheit 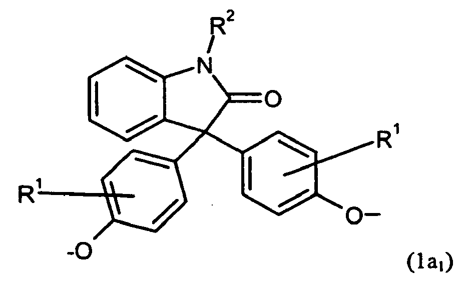 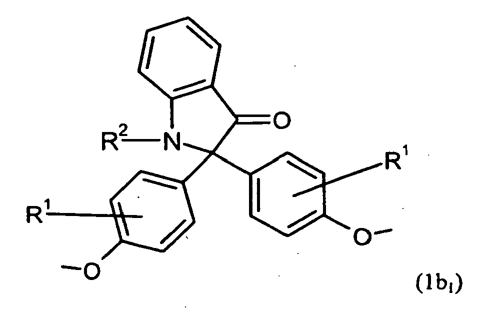 worin

R1 und R2 die oben angegebene Bedeutung haben.

Bevorzugte Bisphenole sind ebenfalls die oben genannten.

Im Falle von Copolycarbonaten können neben einem oder mehreren Bisphenolen der Formel (1), als weitere Monomereinheit Bisphenole der Formel (2) enthalten sein: 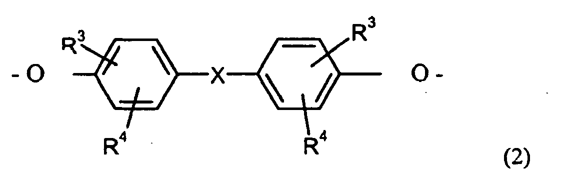 in der
- R3 und R4: unabhängig voneinander für H, C1-C18-Alkyl-, C1-C18-Alkoxy, Halogen wie Cl oder Br oder für jeweils gegebenenfalls substituiertes Aryl oder Aralkyl, bevorzugt für H oder C1-C12-Alkyl, besonders bevorzugt für H oder C1-C8-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-, oder ein für einen Rest der Formel (1b) 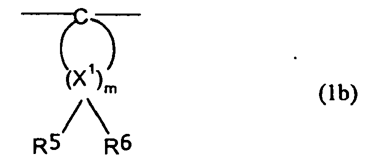 wobei
- R⁵ und R⁶: für jedes X¹ individuell wählbar, unabhängig voneinander Wasserstoff oder C₁ bis C₆- Alkyl, vorzugsweise Wasserstoff, Methyl oder Ethyl bedeuten und
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Beispielhaft werden für die Diphenole der Formel (2), die neben den erfindungsgemäßen Bisphenolen der Formel (1) eingesetzt werden können, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω- Bis-(hydroxyphenyl)-polysiloxane genannt.

Bevorzugte Diphenole der Formel (2) sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl)-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Bisphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Die Bisphenole der Formel (1) können sowohl allein als auch im Gemisch miteinander als auch im Gemisch mit einem oder mehreren Bisphenolen der Formel (2) verwendet werden; unter Polycarbonaten im Sinne der vorliegenden Erfindung sind Copolycarbonate zu verstehen.

Copolycarbonate enthalten im Allgemeinen neben einem Diphenol ausgewählt aus Verbindungen der Formel (1) bis zu 95 Mol-%, vorzugsweise bis zu 80 Mol%, besonders bevorzugt bis 70 Mol-% mindestens ein weiteres Diphenol, ausgewählt aus Verbindungen der Formel (2) (bezogen auf die Summe der Mole eingesetzter Diphenole). Bevorzugt enthalten die Copolycarbonate als untere Grenze mindestens 5 Mol-%, insbesondere 10 Mol-% (bezogen auf die Summe der Mole eingesetzter Diphenole) ausgewählt aus Verbindungen der Formel (2). Besonders bevorzugte Copolycarbonate enthalten 40-60, insbesondere 45-55 Mol-% Diphenol der Formel (1) und 60-40, insbesondere 45-55 Mol-% Diphenol der Formel (2) (bezogen auf die Summe der Mole eingesetzter Diphenole).

Das Copolycarbonat kann insbesondere auch aus einem Gemisch von drei Bisphenolen hergestellt sein, wobei eines aus der Klasse der N-substituierten Isatinbisphenole und die beiden anderen aus den oben beschriebenen Bisphenolen stammt. Ganz besonders bevorzugt handelt es sich hierbei um die Kombination der Bisphenol-Struktur (1b) mit Bisphenol A und Bisphenol TMC. Dabei werden Zusammensetzungen von 50 Mol-% Bisphenol A, 25 Mol-% des Bisphenols aus der Klasse der N-substituierten Isatinbisphenole und 25 Mol-% Bisphenol TMC ganz besonders bevorzugt.

Die erfindungsgemäßen Copolycarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbonat-Eichung).

Die Diphenole sind literaturbekannt oder nach literaturbekannten Verfahren herstellbar (siehe z. B. H. J. Buysch et al., Ullmann's Encyclopedia of Industrial Chemistry, VCH, New York 1991, 5. Ed., Vol. 19, p. 348).

Die Polycarbonate bzw. Copolycarbonate können auch verzweigt sein. Hierzu werden bestimmte geringe Mengen, vorzugsweise Mengen zwischen 0.05 und 5 mol-%, besonders bevorzugt 0,1 bis 3 mol-%, ganz besonders bevorzugt 0,1 bis 2 mol-%, bezogen auf die Mole eingesetzter Diphenol, an trifunktionellen Verbindungen wie z. B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-henol; 2,6-Bis-(2-hydroxy-5'-methyl-benryl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α'α" -Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: ; 1,1,1-Tri-(4-hydroxyphenyl)-ethan und Bis-(3-methyl-4-hydroxyphenyl)-2-oxo-2,3-dihydroindol als sogenannte Verzweiger, eingesetzt. Bevorzugt werden Isatinbiskresol sowie 1,1,1-Tri-(4-hydroxyphenyl)-ethan und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt zu rheologischen Eigenschaften der erhaltenen Polycarbonate, die sich in einer Strukturviskosität im Vergleich zu linearen Typen äußert.

Die vorliegende Erfindung betrifft weiterhin ein Verfahren zur Herstellung der erfindungsgemäßen Copolycarbonate, dadurch gekennzeichnet, dass Bisphenole und evtl. Verzweiger in wässriger alkalischer Lösung gelöst werden und mit einer gegebenenfalls in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht werden. Die Reaktionsführung kann auch mehrstufig erfolgen. Solche Verfahren zur Herstellung von Polycarbonat sind als Zweiphasengrenzflächenverfahren grundsätzlich z. B. aus H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 bekannt und die grundlegenden Bedingungen daher dem Fachmann geläufig.

Die Konzentration der Bisphenole in der wässrigen alkalischen Lösung beträgt dabei 2 bis 25 Gew.-%, bevorzugt 2 bis 20 Gew.-% besonders bevorzugt 2 bis 18 Gew.-% und ganz besonders bevorzugt 3 bis 15 Gew.-%. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5 bevorzugt 20:80 bis 80:20, besonders bevorzugt 30:70 bis 70:30 und ganz besonders bevorzugt 40:60 bis 60:40. Das Molverhältnis Bisphenol zu Phosgen ist kleiner als 1:10, bevorzugt kleiner als 1:6 besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew.-% bevorzugt 2 bis 20 Gew.- %, besonders bevorzugt 2 bis 18 Gew.-% und ganz besonders bevorzugt 3 bis 15 Gew.-%.

Die Konzentration der Aminverbindung beträgt bezogen auf die eingesetzte Bisphenolmenge 0,1 bis 10 mol-% bevorzugt 0,2 bis 8 mol-% besonders bevorzugt 0,3 bis 6 mol-% und ganz besonders bevorzugt 0,4 bis 5 mol-%.

Unter Bisphenolen sind die o. g. Diphenole, mit Anteilen der oben genannten Verzweiger, zu verstehen. Bei der Carbonatquelle handelt es sich um Phosgen, Diphosgen oder Triphosgen, bevorzugt um Phosgen. Für den Fall, dass Phosgen eingesetzt wird, kann gegebenenfalls auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)pyridin. Besonders geeignet sind Triethylamin, Tripropylamin, Triisopropylamin, Tributylamin, Triisobutylamin, N-Methylpiperidin, N-Ethylpiperidin, und N-Propylpiperidin.

Als organisches Lösemittel kommen halogenierte Kohlenwasserstoffe wie Methylenchlorid und/oder Chlorbenzol, Dichlorbenzol, Trichlorbenzol oder Gemische davon oder aromatische Kohlenwasserstoffe, wie z. B. Toluol oder Xylole in Frage.

Die Reaktionstemperatur kann -5°C bis 100°C betragen, bevorzugt 0°C bis 80°C besonders bevorzugt 10°C bis 70°C und ganz besonders bevorzugt 10°C bis 60°C betragen.

Alternativ können die erfindungsgemäßen Copolycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert

Kohlensäurediester im Sinne der Erfindung sind solche der Formel (6) und (7) 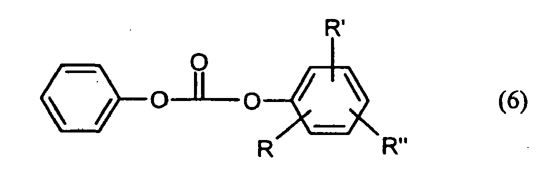 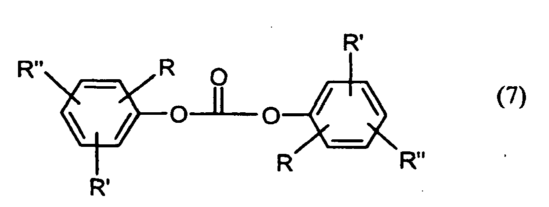 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise

Diphenylcarbonat, Butylphenyl-phenylcarbonat, Di-Butylphenylcarbonat, Isobutylphenylphenylcarbonat, Di-Isobutylphenylcarbonat,tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat,Cyclohexylphenyl-phenylcarbonat, Di-Cyclohexylphenylcarbonat, Phenylphenol-phenylcarbonat, Di-Phenylphenolcarbonat, Isooctylphenylphenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenylphenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)carbonat, Tritylphenyl-phenylcarbonat, Di-Tritylphenylcarbonat,
bevorzugt

Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (8) 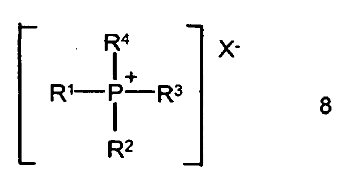 wobei
- R¹⁻⁴: dieselben oder verschiedene C₁-C₁₀-Alkyle, C₆-C₁₀-Aryle, C₇-C₁₀-Aralkyle oder C₅-C₆- Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆- C₁₄-Aryl oder C₇-C₁₂-Aralkyl, bevorzugt Phenyl, sein kann. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Copolycarbonates hergestellt werden.

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen Copolycarbonate können in bekannter Weise aufgearbeitet und zu beliebigen Formkörpern verarbeitet werden, beispielsweise durch Extrusion, Spritzguss oder Extrusionsblasformen.

Den erfindungsgemäßen Copolycarbonaten können noch andere aromatische Polycarbonate und/oder andere aromatische Polyestercarbonate und/oder andere aromatische Polyester in bekannter Weise zugemischt werden, beispielsweise durch Compoundierung.

Den erfindungsgemäßen Copolycarbonaten können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in den entsprechenden Kapiteln des "Plastics Additives Handbook" , ed. Hans Zweifel, 5th Edition 2000, Hanser Publishers, Munich. beschrieben).

Die erfindungsgemäßen Copolycarbonate, gegebenenfalls in Abmischung mit anderen Thermoplasten wie beispielsweise Pfropfpolymerisate auf Basis Acrylnitril/-Butadien/-Styrol oder auf Acrylatkautschuk basierende Pfropfcopolymerisate (s. beispielsweise die in EP-A 640 655 beschriebenen Pfropfpolymerisate) und/oder üblichen Additiven, können zu beliebigen Formkörpem/Extrudaten verarbeitet überall dort eingesetzt werden, wo bereits bekannte Polycarbonate, Polyestercarbonate und Polyester eingesetzt werden. Weitere mögliche Anwendungen der erfindungsgemäßen Polycarbonate sind:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildem.
7. Zur Herstellung von Schaumstoffen (siehe beispielsweise DE-B 1031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen.
11. Zur Herstellung von Präzisionsspritzgussteilen, wie beispielsweise Linsenhalterungen. Hierzu verwendet man Polycarbonate mit einem Gehalt an Glasfasern, die gegebenenfalls zusätzlich etwa 1 bis 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A 0089801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z. B. Scheinwerferlampen, als sogenannte "head-lamps", Streulichtscheiben oder innere Linsen, sowie Langfeldleuchten.
19. Für medizinische Anwendungen, z. B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger gegebenenfalls in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, Visiere oder optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.
32. Schutzhelme

Die Formkörper bzw. Formteile und Extrudate aus den erfindungsgemäßen Polymeren sind ebenfalls Gegenstand dieser Anmeldung.

### Beispiele

### A) Herstellung von Bisphenol der Formel (1)

### Beispiel 1:

### Herstellung von N-Phenylisatin

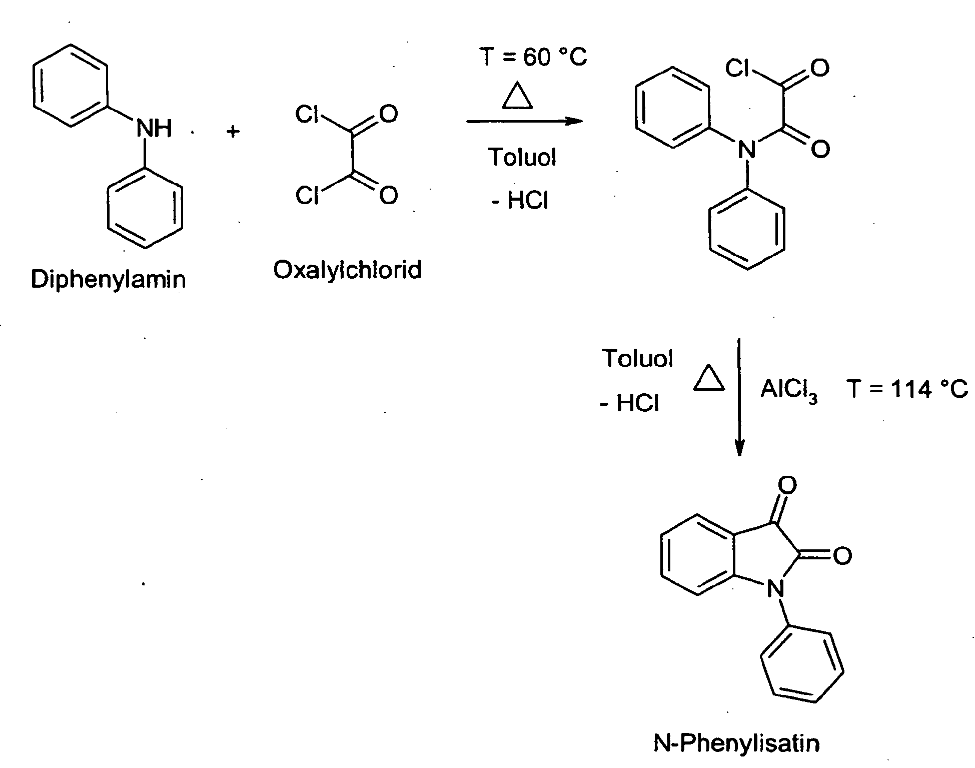

660 g (5,20 mol) Oxalsäuredichlorid, gelöst in 1600 ml wasserfreiem Toluol, werden in einer vorher ausgeheizten Apparatur bei Raumtemperatur vorgelegt.

798 g (4,72 mol) Diphenylamin, ebenfalls gelöst in 1200 ml wasserfreiem Toluol, werden innerhalb von 1,5 Stunden mittels einer Telab-Pumpe (Einstellung: 10 Hübe/Minute bei 30%) unter intensivem Rühren zugepumpt. Währenddessen wird der Reaktionsansatz auf 45 °C thermostatisiert. Die durch die Reaktionswärme erreichte Maximaltemperatur beträgt 50°C.

Direkt nach Zupumpen der Diphenylamin-Lösung erfolgt eine Kontrolle des Reaktionsfortschritts mittels Gaschromatographie (GC) auf die Zwischenstufe vor dem Ringschluss (Molekulargewicht 259,69 g/mol; Umsatz 98,4 Flächen-%; Ermittlung der Retentionszeit durch vorherige GC-MS). Zur Durchführung des Ringschlusses werden 15 g trockenes Aluminiumchlorid zugegeben. Anschließend wird bis auf Rückfluss aufgeheizt. Die Temperatur wird für 3 Stunden gehalten, wobei man das entstehende HCl-Gas in eine alkalische Vernichtervorlage einleitet.

Nach Reaktionsende wird mittels GC ein Reaktionsfortschritt von größer 90 Flächen-% an gewünschtem Endprodukt N-Phenylisatin (Molekulargewicht 223,23 g/mol) festgestellt.

### Aufarbeitung:

Der Reaktionsansatz wird in Wasser gefällt, das Rohprodukt abgesaugt und 3 mal mit destilliertem Wasser gewaschen, wieder scharf abgesaugt und anschließend bei 70 °C im Vakuumtrockenschrank getrocknet.

### Ausbeute:

Man erhält 977,1 g eines orangefarbenen Feststoffs (92,7 % der Theorie) mit einem Schmelzpunkt von 138 °C (GC-Reinheit von 98,7 %).

### Analytik:

- GC-MS: Molekulargewicht 223 g/mol
- ¹H-NMR (400 MHz, TMS, CDCl₃) δ=7,71-7,69 (d, 1H), 7,58-7,52 (m, 3H), 7,47-7,41 (m, 3 H), 7,19-7,15 (t, 1H), 6,91-6,88 (d, 1H).

### Beispiel 2

### Bisphenol der Formel (1)

### Herstellung von 3,3-Bis(4-hydroxyphenyl)-1-phenyl-1H-indol-2-on

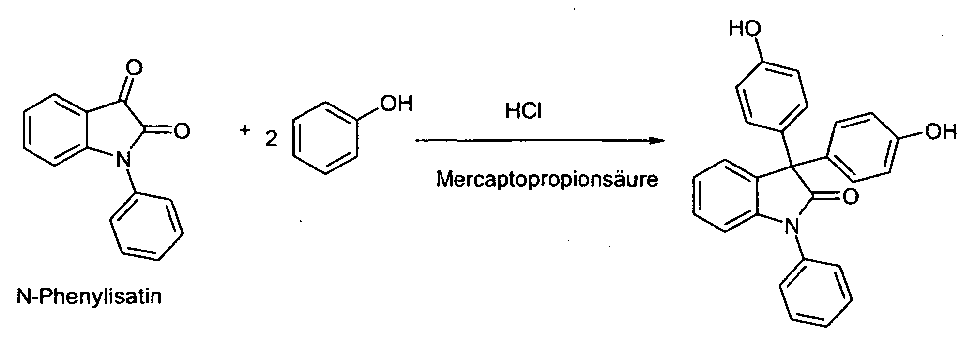

1400 g (6,27 mol) N-Phenylisatin aus Beispiel 1, 3541 g (37,6 mol) aufgeschmolzenes, frisch destilliertes Phenol und 7 g (0,66 mol) 3-Mercaptopropionsäure (Cokatalysator) werden in der inertisierten Apparatur vorgelegt und auf 40 - 45 °C aufgeheizt.

In diese rot-braune, homogene Lösung wird nun vorsichtig unter mäßigem Rühren Chlorwasserstoffgas 25 Minuten lang eingeleitet, wobei die Temperatur auf 67 °C ansteigt.

Anschließend wird der dunkelbraune Ansatz auf Raumtemperatur abgekühlt und die entstandene beige Suspension abgesaugt.

### Analytik des entstandenen Produktes:

1. Kontrolle im GC :
   4,0 Flächen-% Phenol
   14,2 Flächen-% eines Produktisomers 2,2-Bis(4-hydroxyphenyl)-1-phenyl-1-H-indol-2-on
   81,1 Flächen-% des Produkts 3,3-Bis(4-hydroxyphenyl)-1-phenyl-1-H-indol-2-on
   8-maliges Waschen des Rohproduktes mit je 1 Liter Dichlormethan führt zu folgendem Produkt:
   0,03 Flächen-% Phenol
   2,5 Flächen-% des Isomers 2.2-Bis(4-hydroxyphenyl)-1-phenyl-1H-indol-3-on
   97,2 Flächen-% des Produkts 3,3-Bis(4-hvdroxyphenyl)-1-phenyl-1H-indol-2-on
   Ausbeute nach Trocknung:
   830 g eines leicht gelblichen Feststoffs (33,6 % der Theorie).

### Analytik:

- GC-MS: jeweils Molekulargewicht 537 g/mol nach Derivatisierung als Trimethylsilylsaddukt
- ¹H-NMR (400 MHz, TMS, DMSO) δ=9,47 (s, 2H), 7,60-7,57 (t, 2H), 7,50-7,45 (m, 3 H), 7,30-7,35 (d, 1H), 7,28-7,20 (t, 1H), 7,15-7,10 (t, 1H), 7,09-7,04 (d, 4H), 6,81-6,79 (d, 1H), 6,77-6,71 (d, 4H).
*) Isomerenreaktion:

Die Verbindung 2.2-Bis(4-hydroxyphenyl)-1-phenyl-1H-indol-3-on entsteht bei der Kondensation von N-Phenylisatin mit Phenol als Nebenkomponente.

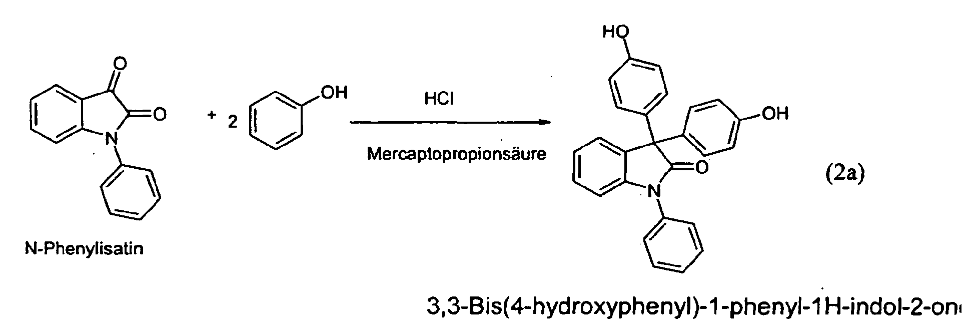

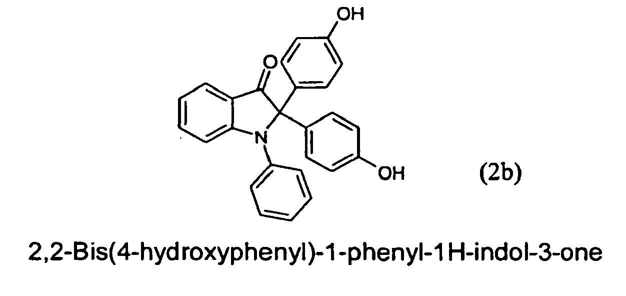

### Analytik

Die analytische Bestimmung der Struktur des erhaltenen Produktes (Beispiel 2) nach Probenvorbereitung (Überführung in das Trimethylsilylderivat) wurde mittels Gaschromatografie-Massenspektrometrie (GC-MS) durchgeführt.

Die Verbindung (2a) als Trimethylsilylderivat weist ein Molekulargewicht von 537 g/mol auf. Im GC findet man einen weiteren Peak bei einer kürzeren Retentionszeit, welcher nach Untersuchung mittels Massenspektrometrie ebenfalls als Trimethylsilylderivat das Molekulargewicht von 537 g/mol aufweist. Dieses Isomer weist die Struktur gemäß Beispiel (2b) auf. Außerdem konnte durch die unterschiedliche Fragmentierung im Massenspektrum gezeigt werden, dass es sich bei dieser Struktur eindeutig um die Struktur (2b) handelt und nicht um die Struktur des Bisphenols der Formel (2c).

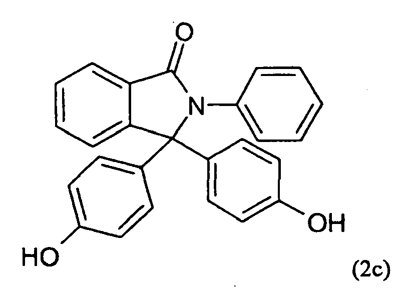

### B) Herstellung von Polycarbonat

### Beispiel 3

Herstellung eines Copolycarbonates (50/50 mol-%) aus Bisphenol A (BPA) und des erfindungsgemäßen Bisphenols gemäß Beispiel 2 (3,3-Bis(4-hydroxyphenyl)-1-phenyl-1H-indol-2-on (97,2 % gemäß GC), 2,2-Bis(4-hydroxyphenyl)-1-phenyl-1H-indol-3-on (2,5% gemäß GC).

Um ausreichende Mengen an Bisphenol des Beispiels für einen Kontiprozess zu erhalten, wurde der Ansatz von Beispiel 2 mehrfach wiederholt.

Mittels einer Laborkontianlage wurde nach dem Phasengrenzflächenverfahren ein Copolycarbonat erhalten. Folgende Synthesebedingungen bzw. Reaktionsparameter/Dosierungen (jeweils Menge pro Stunde) wurden eingehalten:
- 15 %-ige Natriumbisphenolat-Lösung enthaltend ein Gemisch aus Bisphenol A und dem Isomerengemisch aus Beispiel 2 (50/50 mol-%)
- 2,1 mol Natriumlauge pro mol Bisphenol in der Natriumbisphenolat-Lösung
- 1,40 mol Phosgen pro mol Bisphenol (bzw. 1,382 mol Phosgen pro mol Bisphenol + 0,5 mol Kettenabbrecher)
- Temperatur 30 °C während der Phosgenierung
- p-tert Butylphenol (BUP) als Kettenabbrecher
- 3,6 mol% Kettenabbrecher pro mol Bisphenol
- 1 mol-% N-Ethylpiperidin (EPP) pro mol Bisphenol als Katalysator (7,4 %-ige Lösung im Lösungsmittelgemisch Methylenchlorid/Chlorbenzol (50/50 Gew.-%)
- 15,0 %-ige Polycarbonatlösung im Lösungsmittelgemsich Methylenchlorid/Chlorbenzol (50/50) als gewünschte organische Phase
- Masse des entstehenden Copolycarbonates 156 g/h

Folgende Mengen pro Stunde werden dabei umgesetzt:

943,3 g einer 15 %-igen Lösung bestehend aus 52,0 g Bisphenol A, 89,5 g Bisphenol aus Beispiel 5, gelöst in einer alkalischen wässrigen Phase aus 720 g Wasser und 81,8 g konzentrierter Natronlauge (46,7 %-ig), werden zusammen mit 736,9 g eines Lösungsmittelgemisches, bestehend aus Methylenchlorid/Chlorbenzol (50/50), welches 63,0 g Phosgen enthält vereinigt. Zum Regeln des Molekulargewichtes werden nach der Phosgenierung 2,461 g BUP in 140,6 g des Lösungsmittelgemisches Methylenchlorid/Chlorbenzol (50/50) zugegeben.Zum Aufrechterhalten des alkalischen pH-Wertes ca. 12 - 13 werden außerdem 66,0 g konzentrierte Natronlauge (46,7 %-ig) zudosiert. Am hinteren Ende der Verweilstrecke der Apparatur gibt man 0,515 g EPP, gelöst in 6,44 g Lösungsmittelgemisch Methylenchlorid/Chlorbenzol (50/50) hinzu. 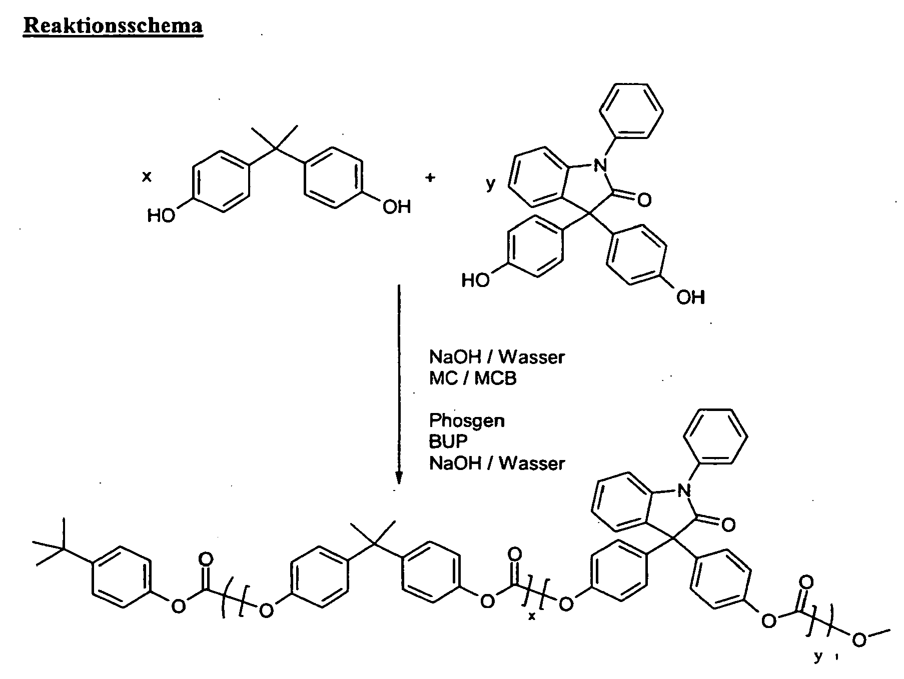 x = 0,5
y=0,5

Bedingt durch das bei der Herstellung von Beispiel 2 entstandende Isomer 2,2-Bis(4-hydroxyphenyl)-1-phenyl-1H-indol-3-on ist in y = 0,5 der entsprechende Anteil des Isomeren enthalten.

Nach Waschen der erhaltenen organischen Copolycarbonatlösung wird das Lösungsmittelgemisch im Vakuum abgedampft, dabei erhält man einen Feststoff, der zerkleinert und homogenisiert wird.

### Analytik

Relative Lösungsviskosität in Dichlormethan bei 25°C (Konzentration 5 g/l): 1,168

Gelpermeations-Chromatographie (GPC, Kalibrierung mittels BPA-Polycarbonat, UV-Detektor 254 nm):
Mn = 8417 g/mol
Mw = 18666 g/mol
D = 2,22 (Polydispersität)
Oligomerengehalt im Bereich 300 - 1500 g/mol: 2,08 %
Glastemperatur (DSC nach 2. Aufheizen 50 - 280 °C, 20°C/min. Aufheizrate): 210°C

### Beispiele 4 - 8

Um in einer Laborkontianlage (begrenzte Kapazität) ausreichende Mengen Polycarbonat zu erhalten, wurde das Verfahren gemäß Beispiel 3 mehrfach durchgeführt. Die daraus erhaltenen Polycarbonate sind wie folgt charakterisiert:

### Beispiel 4

Relative Lösungsviskosität in Dichlormethan bei 25°C(Konzentration 5 g/l): 1,202

Gelpermeations-Chromatographie (GPC, Kalibrierung mittels BPA-Polycarbonat, UV-Detektor 254 nm):
Mn = 10497 g/mol
Mw = 22972 g/mol
D=2,19
Oligomerengehalt im Bereich 300 - 1500 g/mol: 1,41 %
Glastemperatur (DSC nach 2. Aufheizen 50 - 280 °C, 20°C/min. Aufheizrate): 210 °C

### Beispiel 5

Relative Lösungsviskosität in Dichlormethan bei 25°C (Konzentration 5 g/l): 1,215

Gelpermeations-Chromatographie (GPC, Kalibrierung mittels BPA-Polycarbonat, UV-Detektor 254 nm):
Mn = 10052 g/mol
Mw = 24666 g/mol
D = 2,23 Oligomerengehalt im Bereich 300 - 1500 g/mol: 1,41 %
- Glastemperatur (DSC nach 2. Aufheizen 50 - 280 °C, 20°C/min. Aufheizrate): 212 °C

### Beispiel 6

Relative Lösungsviskosität in Dichlormethan (Konzentration 5 g/l):
1,162 / 1,162 (Doppelbestimmung)

Gelpermeations-Chromatographie (GPC, Kalibrierung mittels BPA-Polycarbonat, UV-Detektor 254 nm):
Mn = 8280 g/mol
Mw = 16777 g/mol
D = 2,03
Oligomerengehalt im Bereich 300 - 1500 g/mol: 1,82 %
Glastemperatur (DSC nach 2. Aufheizen 50 - 280 °C, 20°C/min. Aufheizrate): 207 °C

Um in einer Laborkontianlage (begrenzte Kapazität) ausreichende Mengen Polycarbonat zu erhalten, wurde das Verfahren gemäß Beispiel 3 mehrfach durchgeführt. Die daraus erhaltenen Polycarbonate sind wie folgt charakterisiert:

### Beispiel 7

Relative Lösungsviskosität in Dichlormethan (Konzentration 5 g/l):
1,165 / 1,166 (Doppelbestimmung)

Gelpermeations-Chromatographie (GPC, Kalibrierung mittels BPA-Polycarbonat, UV-Detektor 254 nm):
Mn = 8633 g/mol
Mw = 17407 g/mol
D = 2,02
Oligomerengehalt im Bereich 300 - 1500 g/mol: 1,65 %
Glastemperatur (DSC nach 2. Aufheizen 50 - 280 °C, 20°C/min. Aufheizrate): 204 °C

### Beispiel 8

Relative Lösungsviskosität in Dichlormethan (Konzentration 5 g/l):
1,166 / 1,165 (Doppelbestimmung)

Gelpermeations-Chromatographie (GPC, Kalibrierung mittels BPA-Polycarbonat, UV-Detektor 254 nm):
Mn = 8251 g/mol
Mw = 17023 g/mol
D = 2,06
Oligomerengehalt im Bereich 300 - 1500 g/mol: 1,86 %
Glastemperatur (DSC nach 2. Aufheizen 50 - 280 °C, 20°C/min. Aufheizrate): 204 °C

### Beispiel 9

Alle Copölycarbonatfraktionen aus Beispiel 3 -8 werden vereinigt. Das so erhaltene Copolycarbonat ist wie folgt charakterisiert:

Relative Lösungsviskosität in Dichlormethan (Konzentration 5 g/l): 1,174

Gelpermeations-Chromatographie (GPC, Kalibrierung mittels BPA-Polycarbonat, UV-Detektor 254 nm):
Mn = 9004 g/mol
Mw = 18029 g/mol
D = 2,00
Oligomerengehalt im Bereich 300 - 1500 g/mol: 1,44 %
Glastemperatur (DSC nach 2. Aufheizen 50 - 280 °C, 20°C/min. Aufheizrate): 207 °C

### C) Prüfung der Metallhaftung des Copolycarbonats gemäß Beispiel 9

Das Copolycarbonat gemäß Beispiel 9 wird zu Granulat extrudiert und anschließend nach Vortrocknung für 4 Stunden bei 130 °C zu runden Probekörper verspritzt (Durchmesser: 2 cm, Dicke 3 mm). Auf die so erhaltenen Probekörper wird eine Schicht aus 200 nm Aluminium gesputtert. Auf diese Metallschicht wird eine Klebeband Typ 3M 853 der Fa. 3M aufgebracht. Zum Test der Metallhaftung wird dieses Klebeband unmittelbar nach Aufbringung wieder abgezogen.

Im Vergleich zu einer analog metallisierten Probe aus verspritztem Copolycarbonat aus 65 mol-% Bisphenol A und 35 mol-% Bisphenol TMC mit einer relativen Lösungsviskosität von 1,26, gemessen in Dichlormethan bei 25°C und einer Konzentration von 5 g/l wird dabei eine verbesserte Haftung des Aluminiums auf der Copolycarbonatoberfläche festgestellt:

Erfindungsgemäßer Probekörper: nach Abziehen des Klebebandes verbleiben 19 % der ursprünglichen Aluminiumfläche auf dem Polycarbonatsubstrat

Vergleichsprobekörper: Auf der Vergleichsprobe lässt sich nach dem Abziehen des Klebebandes keinerlei Rest des aufgesputterten Aluminiums mehr erkennen. Der Aluminiumbelag hängt vollständig auf dem Klebeband.

## Patentansprüche

1. Copolycarbonat enthaltend Bisphenole der Formeln (1a₁) und (1b₁) (isomerengemisch) als wiederkehrende Monomereinheit 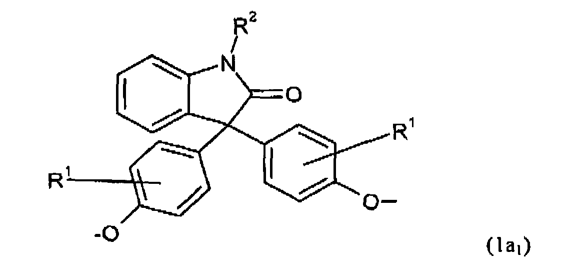 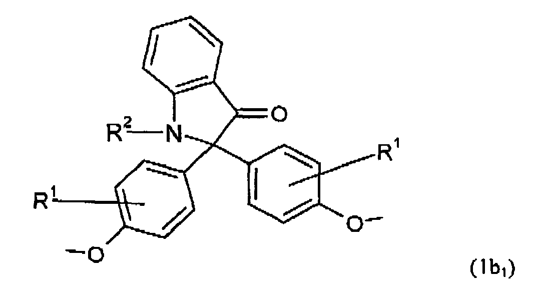 in welcher
R¹ unabhängig voneinander für Wasserstoff oder C₁C₁₀- Alkyl steht und
R² für C₁-C₁₀-Alkyl, oder jeweils gegebenenfalls durch Wasserstoff und/oder C₁-C₁₀- Alkyl substituiertes Phenyl oder Benzyl steht.

2. Copolycarbonat gemäß Anspruch 1, enthaltend bis zu 95 Mol-% (bezogen auf die Menge eingesetzter Diphenole) Diphenole der Formel (2) 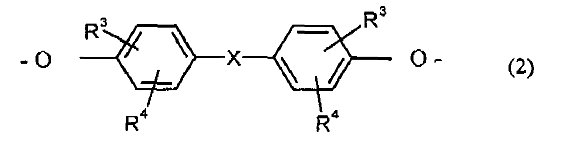 in welcher
R³ und R⁴ unabhängig voneinander für Wasserstoff, C₁-C₁₈-Alkyl-, C₁-C₁₈-Alkoxy, Halogen, jeweils gegebenenfalls substituiertes Aryl oder Aralkyl, stehen, und
X für eine Einfachbindung, -SO₂-, -CO-, -O-, -S-, C₁- bis C₆-Alkylen, C₂- bis C₅- Alkyliden oder C₅- bis C₆- Cycloalkyliden, welches mit C₁- bis C₆-Alkyl substituiert sein kann, für C₆-C₁₂-Arylen, welches gegebenenfalls mit weiteren Heteroatom enthaltenden aromatischen Ringen kondensiert sein kann, steht.

3. Copolycarbonat gemäß Anspruch 1 enthaltend bis zu 80 Mol-% (bezogen auf die Menge eingesetzter Diphenole) Diphenole der Formel (2).

4. Copolycarbonat gemäß Anspruch 3 enthaltend 40 - 60 Mol-% Diphenole der Formel (1) und 60 bis 40 Mol-% Diphenole der Formel (2), wobei Diphenole der Formel (1) das Isomerengemisch der allgemeinen Formeln (1a) und (1b) bedeutet: 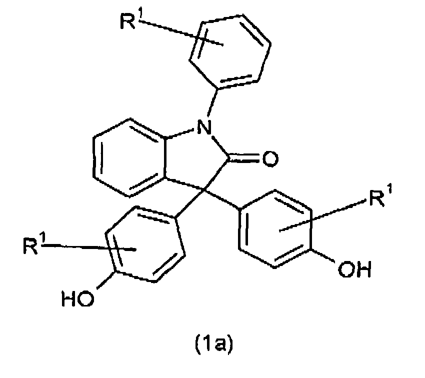 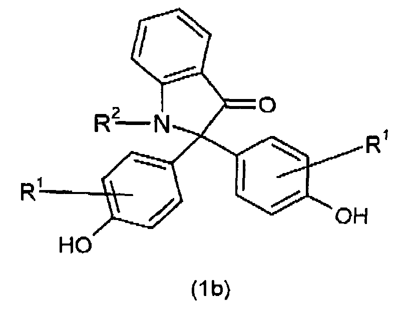 in welcher
R¹ unabhängig voneinander für Wasserstoff oder C₁-C₁₀-Alkyl steht,
und
R² für C₁-C₁₀ Alkyl, jeweils gegebenenfalls unsubstituiertes oder substituiertes Phenyl oder Benzyl, steht, wobei als Substituenten für Phenyl und Benzyl die bei R¹ genannten Reste bevorzugt sind.

5. Copolycarbonat gemäß Anspruch 3 enthaltend 45 - 55 Mol% Diphenole der Formel (1) und 55 bis 45 Mol-% Diphenole der Formel (2), wobei Diphenol der Formel (1) das Isomerengemisch der allgemeinen Formeln (1a) und (1b) bedeutet.

6. Copolycarbonat gemäß Anspruch 1, worin in den Formeln (1a₁) und (1b₁) R¹ Wasserstoff und R² Phenyl bedeuten.

7. Copolycarbonat gemäß Anspruch 2, wobei Diphenole der Formel (2) ausgewählt sind aus mindestens einem aus der Gruppe bestehend aus Bisphenol A, 4,4'-Dihydroxybiphenyl, Bisphenol M, Bisphenol TMC.

8. Verwendung von Copolycarbonaten gemäß Anspruch 1 zur Herstellung von Formteilen.

9. Formteile, erhältlich aus Copolycarbonaten gemäß Anspruch 1.

10. Produkte gemäß Anspruch 9, aus Spritzguss- oder Extrusionsverfahren, wie z. B. Autoscheiben, optische Datenspeicher, Platten, Folien und Flaschen.

11. Metallisierte Formteile gemäß Anspruch 9.

12. Blends der Copolycarbonat gemäß Anspruch 1 mit thermoplastischen Polymeren

13. Verfahren zur Herstellung von Copolycarbonat gemäß Anspruch 1 nach dem Phasengrenzflächenverfahren, **dadurch gekennzeichnet, dass** Verbindungen der Formel (1a) als Bisphenol eingesetzt werden.

14. Verbindung der Formeln (1a) und (1b) 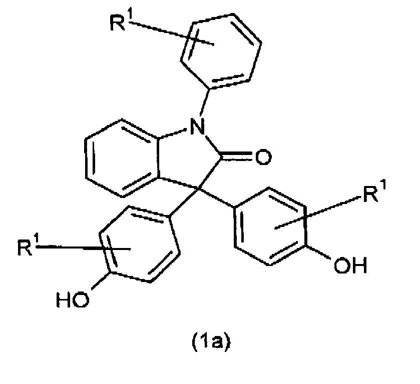 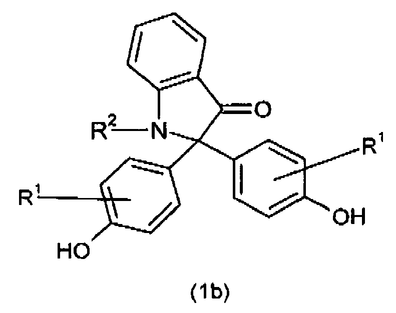 in welcher
R¹ unabhängig voneinander für Wasserstoff oder C₁-C₁₀-Alkyl steht,
und
R² für C₁-C₁₀ Alkyl, jeweils gegebenenfalls unsubstituiertes oder substituiertes Phenyl oder Benzyl, steht, wobei als Substituenten für Phenyl und Benzyl die bei R¹ genannten Reste bevorzugt sind.

15. Verwendung der Verbindungen gemäß Anspruch 14 zur Herstellung von Copolycarbonaten.

## Claims

1. Copolycarbonate comprising bisphenols of the formulae (1a₁) and (1b₁) (isomer mixture) as repeating monomer unit 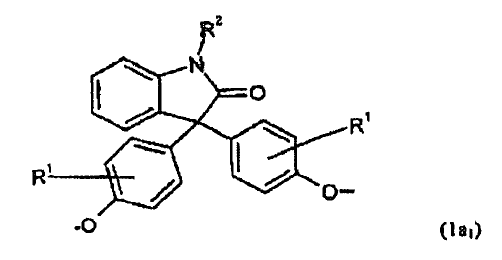 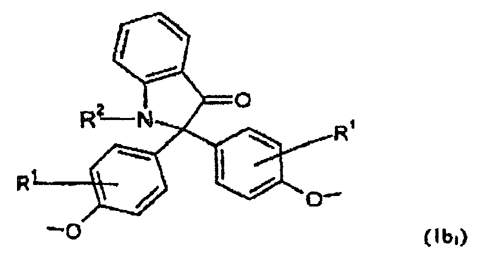 in which
R¹ independently at each occurrence is hydrogen or C₁-C₁₀ alkyl and
R² is C₁-C₁₀ alkyl, or is phenyl or benzyl each optionally substituted by hydrogen and/or C₁-C₁₀ alkyl.

2. Copolycarbonate according to Claim 1, comprising up to 95 mol% (based on the amount of diphenols used) of diphenols of the formula (2) 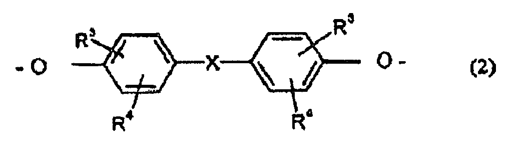 in which
R³ and R⁴ independently of one another are hydrogen, C₁-C₁₈ alkyl, C₁-C₁₈ alkoxy, halogen, or in each case optionally substituted aryl or aralkyl, and
X is a single bond, -SO₂-, -CO-, -O-, -S-, C₁ to C₆ alkylene, C₂ to C₅ alkylidene or C₅ to C₆ cycloalkylidene, which may be substituted by C₁ to C₆ alkyl, or is C₆-C₁₂ arylene which may optionally be fused with further heteroatom-containing aromatic rings.

3. Copolycarbonate according to Claim 1, comprising up to 80 mol% (based on the amount of diphenols used) of diphenols of the formula (2).

4. Copolycarbonate according to Claim 3, comprising 40 - 60 mol% of diphenols of the formula (1) and 60 to 40 mol% of diphenols of the formula (2), where diphenols of the formula (1) means the isomer mixture of the general formulae (1a) and (1b): 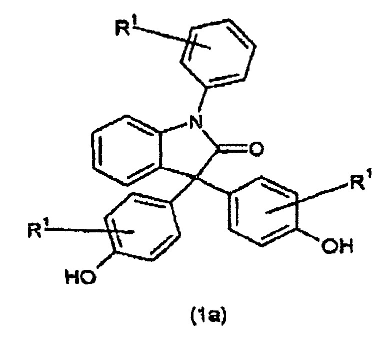 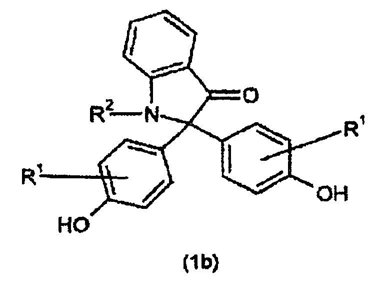 in which
R¹ independently at each occurrence is hydrogen or C₁-C₁₀ alkyl
and
R² is C₁-C₁₀ alkyl, or in each case optionally unsubstituted or substituted phenyl or benzyl, with preferred substituents for phenyl and benzyl being the radicals stated for R¹.

5. Copolycarbonate according to Claim 3, comprising 45 - 55 mol% of diphenols of the formula (1) and 55 to 45 mol% of diphenols of the formula (2), where diphenol of the formula (1) means the isomer mixture of the general formulae (1a) and (1b).

6. Copolycarbonate according to Claim 1, in which, in the formulae (1a₁) and (1b₁), R¹ is hydrogen and R² is phenyl.

7. Copolycarbonate according to Claim 2, where diphenols of the formula (2) are selected from at least one from the group consisting of bisphenol A, 4,4'-dihydroxybiphenyl, bisphenol M and bisphenol TMC.

8. Use of copolycarbonates according to Claim 1 for producing mouldings.

9. Mouldings obtainable from copolycarbonates according to Claim 1.

10. Products according to Claim 9, from injection-moulding or extrusion processes, such as, for example, automotive glazing, optical data storage devices, sheets, films and bottles.

11. Metalized mouldings according to Claim 9.

12. Blends of the copolycarbonate according to Claim 1 with thermoplastic polymers.

13. Process for preparing copolycarbonate according to Claim 1 by the phase interface process, **characterized in that** compounds of the formula (1a) are used as bisphenol.

14. Compounds of the formulae (1a) and (1b) 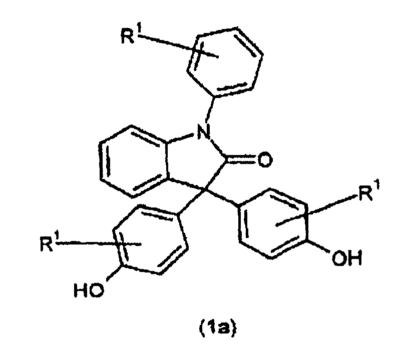 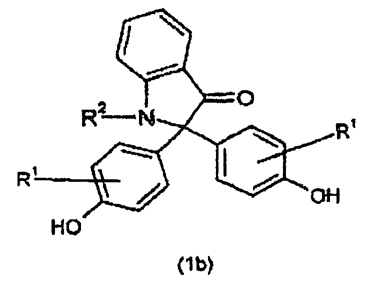 in which
R¹ independently at each occurrence is hydrogen or C₁-C₁₀ alkyl
and
R² is C₁-C₁₀ alkyl, or in each case optionally unsubstituted or substituted phenyl or benzyl, with preferred substituents for phenyl and benzyl being the radicals stated for R¹.

15. Use of the compounds according to Claim 14 for preparing copolycarbonates.

## Revendications

1. Copolycarbonate contenant des bisphénols de formule (1a₁) et (1b₁) (mélange d'isomères) en tant qu'unité monomère de répétition 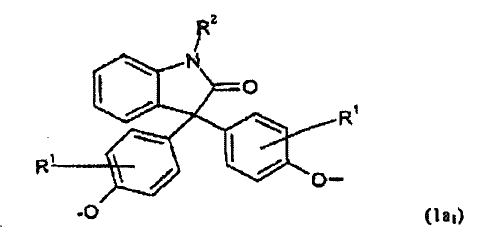 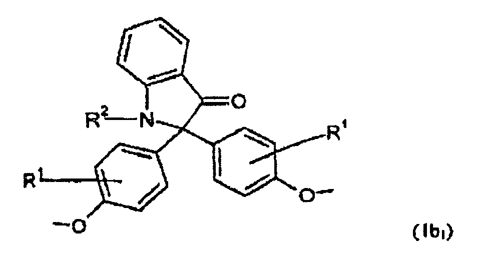 dans lesquelles
les R¹ représentent indépendamment les uns des autres l'hydrogène ou un alkyle en C₁-C₁₀ et
R² représente un alkyle en C₁-C₁₀ ou un phényle ou benzyle à chaque fois éventuellement substitué par l'hydrogène et/ou un alkyle en C₁-C₁₀.

2. Copolycarbonate selon la revendication 1, contenant jusqu'à 95 % en moles (par rapport à la quantité de diphénols utilisés) de diphénols de formule (2) 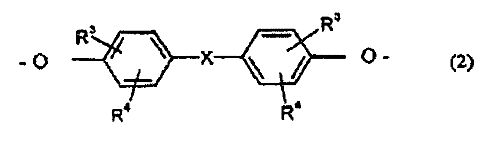 dans laquelle
R³ et R⁴ représentent indépendamment les uns des autres l'hydrogène, un alkyle en C₁-C₁₈, un alcoxy en C₁-C₁₈, un halogène, un aryle ou aralkyle à chaque fois éventuellement substitué, et
X représente une liaison simple, -SO₂-, -CO-, -O-, -S-, un alkylène en C₁ à C₆, un alkylidène en C₂ à C₅ ou un cycloalkylidène en C₅ à C₆, qui peut être substitué par un alkyle en C₁ à C₆, un arylène en C₆-C₁₂, qui peut éventuellement être condensé avec d'autres cycles aromatiques contenant des hétéroatomes.

3. Copolycarbonate selon la revendication 1, contenant jusqu'à 80 % en moles (par rapport à la quantité de diphénols utilisés) de diphénols de formule (2).

4. Copolycarbonate selon la revendication 3, contenant 40 à 60 % en moles de diphénols de formule (1) et 60 à 40 % en moles de diphénols de formule (2), diphénols de formule (1) signifiant le mélange d'isomères de formules générales (1a) et (1b) : 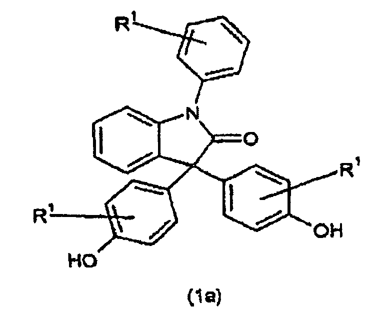 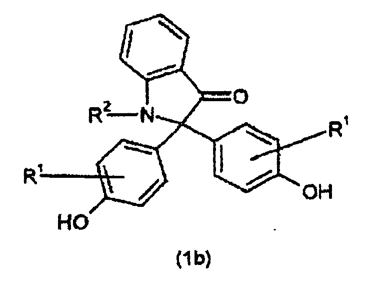 dans lesquelles
les R¹ représentent indépendamment les uns des autres l'hydrogène ou un alkyle en C₁-C₁₀
et
R² représente un alkyle en C₁-C₁₀, un phényle ou benzyle à chaque fois éventuellement non substitué ou substitué, les radicaux cités pour R¹ étant préférés en tant que substituants pour le phényle et le benzyle.

5. Copolycarbonate selon la revendication 3, contenant 45 à 55 % en moles de diphénols de formule (1) et 55 à 45 % en moles de diphénols de formule (2), diphénols de formule (1) signifiant le mélange d'isomères de formules générales (1a) et (1b).

6. Copolycarbonate selon la revendication 1, dans lequel dans les formules (1a₁) et (1b₁), R¹ signifie l'hydrogène et R² un phényle.

7. Copolycarbonate selon la revendication 2, dans lequel les diphénols de formule (2) sont choisis parmi au moins un du groupe constitué par le bisphénol A, le 4,4'-dihydroxybiphényle, le bisphénol M, le bisphénol TMC.

8. Utilisation de copolycarbonates selon la revendication 1 pour la fabrication de pièces moulées.

9. Pièces moulées, pouvant être obtenues à partir de copolycarbonates selon la revendication 1.

10. Produits selon la revendication 9, issus de procédés de moulage par injection ou d'extrusion, tels que p. ex. des vitres d'automobiles, des stockages de données optiques, des plaques, des films et des bouteilles.

11. Pièces moulées métallisées selon la revendication 9.

12. Mélange du copolycarbonate selon la revendication 1 avec des polymères thermoplastiques.

13. Procédé de fabrication d'un copolycarbonate selon la revendication 1 par le procédé d'interface, **caractérisé en ce que** des composés de formule (1a) sont utilisés en tant que bisphénol.

14. Composé de formule (1a) et (1b) 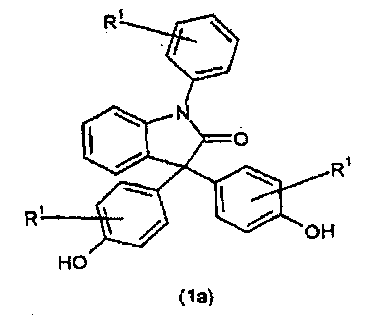 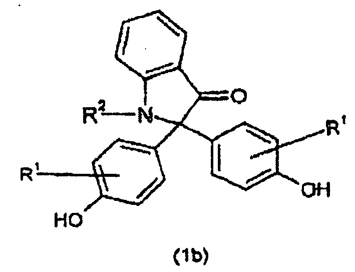 dans lesquelles
les R¹ représentent indépendamment les uns des autres l'hydrogène ou un alkyle en C₁-C₁₀
et
R² représente un alkyle en C₁-C₁₀, un phényle ou benzyle à chaque fois éventuellement non substitué ou substitué, les radicaux cités pour R¹ étant préférés en tant que substituants pour le phényle et le benzyle.

15. Utilisation des composés selon la revendication 14 pour la fabrication de copolycarbonates.
